(19) Europäisches Patentamt
European Patent Office
Office européen des brevets

(11) EP 0 904 305 B1

(12) **EUROPÄISCHE PATENTSCHRIFT**

(45) Veröffentlichungstag und Bekanntmachung des Hinweises auf die Patenterteilung:
**16.02.2000 Patentblatt 2000/07**

(21) Anmeldenummer: **97925024.8**

(22) Anmeldetag: **30.05.1997**

(51) Int Cl.[7]: **C08F 265/04**, C08L 51/00, C08F 257/00, C08L 25/02

(86) Internationale Anmeldenummer:
**PCT/EP97/02820**

(87) Internationale Veröffentlichungsnummer:
**WO 97/47668 (18.12.1997 Gazette 1997/54)**

(54) **TEILCHENFÖRMIGE PFROPFCOPOLYMERISATE UND DIESE ENTHALTENDE THERMOPLASTISCHE FORMMASSEN MIT VERBESSERTER EINFÄRBBARKEIT**

PARTICLE-SHAPED GRAFT COPOLYMERS AND THERMOPLASTIC MOULDED MATERIALS CONTAINING THE SAME AND HAVING AN IMPROVED DYEING BEHAVIOUR

COPOLYMERES GREFFES PARTICULAIRES ET MATIERES MOULEES THERMOPLASTIQUES LES CONTENANT ET PRESENTANT UN COMPORTEMENT A LA COLORATION AMELIORE

(84) Benannte Vertragsstaaten:
**BE DE ES FR GB IT NL**

(30) Priorität: **12.06.1996 DE 19623416**

(43) Veröffentlichungstag der Anmeldung:
**31.03.1999 Patentblatt 1999/13**

(73) Patentinhaber: **BASF AKTIENGESELLSCHAFT**
**67056 Ludwigshafen (DE)**

(72) Erfinder:
- **FISCHER, Wolfgang**
  **69190 Walldorf (DE)**
- **KOCH, Jürgen**
  **D-67141 Neuhofen (DE)**
- **McKEE, Graham, Edmund**
  **D-67433 Neustadt (DE)**

(56) Entgegenhaltungen:
**EP-A- 0 006 562** **EP-A- 0 450 511**
**EP-A- 0 514 071** **EP-A- 0 711 807**
**EP-A- 0 725 091** **EP-A- 0 725 094**
**EP-A- 0 735 063** **DE-A- 4 442 168**
**US-A- 3 793 282** **US-A- 4 564 653**
**US-A- 5 196 480** **US-A- 5 252 666**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 904 305 B1

## Beschreibung

Die vorliegende Erfindung betrifft teilchenförmige Pfropfcopolymerisate, aufgebaut aus

$a_1$) 15 bis 70 Gew.-%, bezogen auf A), einer Pfropfgrundlage mit einer Glasübergangstemperatur von weniger als 10°C auf der Basis von

$a_{11}$) 2,5 bis 97,4 Gew.-%, bezogen auf $a_1$), mindestens eines Alkylacrylats mit 1 bis 30 C-Atomen im Alkylrest,

$a_{12}$) 0 bis 49,9 Gew.-%, bezogen auf $a_1$), eines weiteren, mit $a_{11}$) copolymerisierbaren einfach ungesättigten Monomeren

$a_{13}$) 0,01 bis 7,5 Gew.-%, bezogen auf $a_1$), mindestens eines polyfunktionellen vernetzend wirkenden Monomeren und

$a_{14}$) 2,5 bis 97,4 Gew.-%, bezogen auf $a_1$), mindestens eines Monomeren mit einem Brechungsindex $n_D^{20}$ von mehr als 1,50 der folgenden allgemeinen Formel

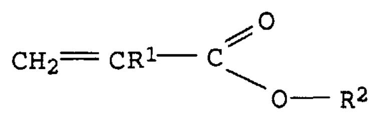

wobei
$R^1$ Wasserstoff oder eine Methylgruppe und $R^2$ $C_6$-$C_{12}$ Aryl-, mit $C_1$-$C_4$ Alkyl- oder Alkoxy substituiertes $C_6$-$C_{12}$ Aryl oder halogensubstituiertes Aryl darstellen, wobei der Substituent $R^2$ direkt am aromatischen Ring oder über eine aliphatische Gruppe an den Acrylsäureester gebunden sein kann,

und

$a_2$) 30 bis 85 Gew.-%, bezogen auf A) mindestens einer weiteren, in Gegenwart des nach der Herstellung von $a_1$) erhaltenen Produkts polymerisierten Stufe aus, vinylaromatischen Monomeren oder polaren, ethylenisch ungesättigten Monomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest.

Um zu schlagzähen, thermoplastischen Formmassen zu gelangen, gibt man Pfropfkautschuke zu bei Raumtemperatur spröden Polymerisaten, die die Matrix bilden. Die Herstellung teilchenförmiger Pfropfpolymerisate aus einem kautschukelastischen Kern, d.h. einem Polymeren mit einer Glasübergangstemperatur von unter 0°C und einer Pfropfhülle mit einer Glasübergangstemperatur von über 25°C (Glasübergangstemperatur ermittelt nach der DSC-Methode; K.H. Illers, Makromol. Chemie 127 (1969) S. 1), zum Beispiel durch Emulsionspolymerisation, ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Propfgrundlage polymerisiert.

Die Monomeren für die äußerste Pfropfhülle werden in der Regel so gewählt, daß diese mit dem zu modifizierenden Thermoplasten verträglich oder teilverträglich ist. Die Herstellung solcher Schlagzähmodifier ist seit langem bekannt und zum Beispiel in der EP 132 339 beschrieben. Diese Pfropfkautschuke führen jedoch im allgemeinen zu einer Verschlechterung der Einfärbbarkeit der Thermoplaste. Dies gilt um so mehr, je größer die Kautschukteilchen sind und je größer der Unterschied der Brechungsindices der Matrix und der Kautschukteilchen ist (s. H.J. Biangardi, Angew. Makrom. Chem. 1990, 183, 221-241). In der DE-A 2826925 wird zur Verbesserung der Einfärbbarkeit von Formmassen, die großteilige Kautschukpartikeln enthalten, der Einsatz einer Mischung groß- und kleinteiliger Kautschukpartikeln beschrieben. Die erzielten Ergebnisse sind jedoch noch immer nicht in vollem Umfang zufriedenstellend.

Gemäß der DE 42 42 974 wird als Matrix eine Mischung verschiedener Copolymerisate eingesetzt, was jedoch nachteilige Auswirkungen auf die Spannungsrißbeständigkeit hat.

In der EP-A 132339 werden zur Verbesserung der Einfärbbarkeit von Polyestern und Polycarbonaten spezielle Acrylatkautschuke mit einem "harten" Kern, einer ersten "weichen" Hülle und einer "harten" äußeren Hülle eingesetzt (die Begriffe "hart" und "weich" beziehen sich dabei auf die Glasübergangstemperatur ($T_g$) von Polymeren der Monomeren der entsprechenden Stufen, wobei "hart" für eine $T_g$ von mehr als 20°C und "weich" für eine $T_g$ von weniger

als 20°C steht. Zwar wird damit eine Verbesserung der Einfärbbarkeit der Thermoplaste erreicht, doch ist das Ergebnis noch nicht in vollem Umfang zufriedenstellend.

Die Dokumente EP-A 450 511, US-A 5 252 666, US-A 3 793 282, EP-A 711 807, EP-A 603 674, EP-A 735 063, GB-A 1 124 911, US-A 4 224 419 und US-A 5 196 480 offenbaren Pfropfpolymerisate, die jedoch keine Arylacrylate (aromatisch substituierte Acrylate) enthalten.

Der vorliegenden Erfindung lag daher die Aufgabe zugrunde, Wege zur Verbesserung der Einfärbbarkeit schlagzäh modifizierter thermoplastischer Formmassen aufzuzeigen bzw. Komponenten zur Herstellung solcher Formmassen zur Verfügung zu stellen.

Diese Aufgabe wurde erfindungsgemäß durch die teilchenförmigen Pfropfcopolymerisate gemäß Anspruch 1 und 2 sowie durch die thermoplastischen Formmassen gemäß Anspruch 3 und 4 gelöst.

Bevorzugte Ausführungsformen der Erfindung sind den Unteransprüchen und der folgenden Beschreibung zu entnehmen.

Das erfindungsgemäße teilchenförmige Pfropfcopolymerisat A enthält als Komponente $a_1$) 15 bis 70, vorzugsweise 20 bis 65 und insbesondere 20 bis 60 Gew.-%, bezogen auf A), einer Pfropfgrundlage mit einer Glasübergangstemperatur von weniger als 10°C, auf der Basis von

$a_{11}$) 2,5 bis 97,4 vorzugsweise 5 bis 94,9 und insbesondere 10 bis 85,9 Gew.-%, bezogen auf $a_1$) eines Alkylacrylates mit 1 bis 30 C-Atomen im Alkylrest,

$a_{12}$) 0 bis 49,9, vorzugsweise 2 bis 45 und insbesondere 4 bis 40 Gew.-%, bezogen auf $a_1$) eines weiteren, mit $a_{11}$) copolymerisierbaren einfach ungesättigten Monomeren,

$a_{13}$) 0,01 bis 7,5 vorzugsweise 0,05 bis 4 und insbesondere 0,1 bis 4 Gew.-%, bezogen auf $a_1$) eines polyfunktionellen, vernetzend wirkenden Monomeren und

$a_{14}$) 2,5 bis 97,4, vorzugsweise 5 bis 94,9 und insbesondere 10 bis 85,9 Gew.-%, bezogen auf $a_1$), mindestens eines Monomeren mit einem Brechungsindex $n_D^{20}$ von mehr als 1,50 der folgenden allgemeinen Formel

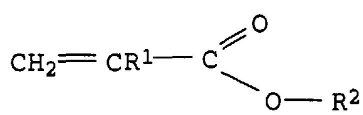

wobei
$R^1$ Wasserstoff oder eine Methylgruppe und $R^2$ $C_6$-$C_{12}$ Aryl-, mit $C_1$-$C_4$ Alkyl- oder Alkoxy substituiertes $C_6$-$C_{12}$ Aryl oder halogensubstituiertes Aryl darstellen, wobei der Substituent $R^2$ direkt am aromatischen Ring oder über eine aliphatische Gruppe an den Acrylsäureester gebunden sein kann,

Bevorzugte Monomere $a_{11}$) sind Alkylacrylate mit 2 bis 30 C-Atomen im Alkylrest, insbesondere Ethylacrylat, tert.-, iso- und n-Butylacrylat und 2-Ethylhexylacrylat, wovon die beiden letztgenannten besonders bevorzugt werden.

Als bevorzugte Monomere $a_{12}$) seien Isopren, Butadien, Styrol, Acrylnitril, Methacrylnitril und/oder Vinylalkylether mit 1 bis 8 C-Atomen im Alkylrest (z.B. Vinylmethylether, Vinylpropylether, Vinylethylether) oder Mischungen derselben genannt.

Beispielhaft für vernetzend wirkende polyfunktionelle Monomere $a_{13}$) seien Divinylbenzol, Diallylmaleat, Diallylfumarat, Diallylphthalat, Butandioldiacrylat und Dihydrodicyclopentadienylacrylat (DCPA, wie in der DE-A 12 60 135 beschrieben) genannt, wobei letzteres bevorzugt wird.

Beispielhaft seien weiter Triallylcyanurat und Triallylisocyanurat genannt.

Durch Verwendung der Comonomere $a_{12}$) und $a_{13}$) läßt sich das Eigenschaftsprofil der Polymerisate $a_1$) z. B. hinsichtlich Vernetzungsgrad steuern, was in manchen Fällen wünschenswert sein kann.

Monomere $a_{14}$) sind Acrylsäureester der folgenden allgemeinen Formel

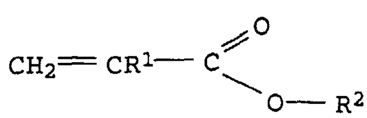

wobei
$R^1$ Wasserstoff oder eine Methylgruppe und $R^2$ $C_6$-$C_{12}$ Aryl-, mit $C_1$-$C_4$ Alkyl- oder Alkoxy substituiertes $C_6$-$C_{12}$ Aryl oder halogensubstituiertes Aryl darstellen.

Bevorzugte Reste $R^2$ sind Phenoxyethyl-, Benzyl-, Phenylpropyl- und Phenylethyl-.

Aus der vorstehenden Beschreibung der Monomeren $a_{14}$) geht hervor, daß der Substituent $R^2$ direkt am aromatischen Ring oder über eine aliphatische Gruppe an den Acrylsäureester gebunden sein kann.

Verfahren zur Herstellung von Polymeren $a_1$) sind dem Fachmann bekannt, und in der Literatur beschrieben, z.B. in der DE-PS 1 260 135. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 50 bis 700, insbesondere von 100 bis 600 nm aufweist.

Auf die Pfropfgrundlage $a_1$) ist eine weitere Stufe $a_2$) gepfropft, die aufgebaut ist aus
vinylaromatischen Monomeren, vorzugsweise Styrol oder substituierten Styrolen der allgemeinen Formel I

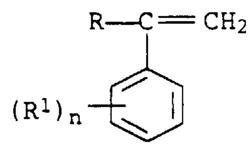

wobei R einen Alkylrest mit 1 bis 8 C-Atomen, ein Wasserstoffatom oder Halogen und $R^1$ Alkylreste mit 1 bis 8 C-Atomen oder ein Halogenatom darstellen und n den Wert 0, 1, 2 oder 3 hat, und/ oder
polaren ethylenisch ungesättigten Monomeren aus der Gruppe Acrylnitril, Methacrylnitril, Ester der Meth(acrylsäure) mit 1 bis 20 C-Atomen im Alkylrest, Maleinsäureanhydrid, (Meth)acrylamid Vinylalkylether mit 1-8 C-Atomen im Alkylrest und/oder Phenylmaleinimid oder deren Mischungen.

Der Anteil der einzelnen Monomeren zur Herstellung der Stufe $a_2$) unterliegt keiner besonderen Beschränkung; in vielen Fällen haben sich jedoch Mischungen aus 50 bis 95, vorzugsweise 60 bis 90 und insbesondere 65 bis 80 Gew.-% polaren, ethylenisch ungesättigten Comonomeren bewährt.

Die Pfropfhülle $a_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 31 49 358 und der DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Für einige Anwendungen hat es sich als vorteilhaft erwiesen, die Pfropfgrundlage $a_1$) in Gegenwart von teilchenförmigen Polymeren (ggf. vernetzt) herzustellen, die vorzugsweise aus den Monomeren hergestellt werden, wie sie hierzu für die Pfropfhülle $a_1$) beschreiben werden. Dadurch erhält man einen dreistufigen Aufbau der Abfolge "hart-weich-hart".

Der Anteil solcher Polymerer, bezogen auf A) liegt dabei im allgemeinen im Bereich von 0,1 bis 10, vorzugsweise von 0,1 bis 5 und insbesondere von 0,1 bis 2,5 Gew.-%, wobei die Anteile der Komponenten $a_1$) und $a_2$) dann entsprechend anzupassen sind.

Das erfindungsgemäße Pfropfcopolymerisat weist im allgemeinen eine mittlere Teilchengröße von vorzugsweise 50 bis 1000 nm, insbesondere von 100 bis 700 nm ($d_{50}$-Gewichtsmittelwert) auf. Die Bedingungen bei der Herstellung des Elastomeren $a_1$) und bei der Pfropfung-werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in der DE-OS 28 26 925 und dem US-Patent 5,196,480 beschrieben, auf die hier wegen näherer Details verwiesen sei.

Demzufolge werden als bevorzugte Mischungen von Acrylesterpolymerisaten solche eingesetzt, in denen ein erstes Polymer eine Teilchengröße $d_{50}$ im Bereich von 50 bis 150 nm und ein zweites Polymer eine Teilchengröße von 200 bis 700 nm aufweist, wie sie in der bereits erwähnten US-PS 5,196,480 beschrieben werden.

Eine weitere Ausführungsform der Erfindung betrifft thermoplastische Formmassen, die neben dem erfindungsgemäßen Pfropfcopolymeren (A) ein weiteres thermoplastisches Polymerisat B mit einer Glasübergangstemperatur von mehr als 20°C enthalten. Das Mengenverhältnis A:B liegt dabei im allgemeinen im Bereich von 5:95 bis 95:

5, vorzugsweise 10:90 bis 90:10 und insbesondere 80:20 bis 20:80.

Bevorzugte Polymerisate B sind Polymere auf der Basis von Methylmethacrylat, insbesondere Polymethylmethacrylat sowie Copolymerisate aus 50 bis 95, vorzugsweise 55 bis 90 und insbesondere 60 bis 85 Gew.-% vinylaromatischen Monomeren und 5 bis 50, vorzugsweise 10 bis 45 und besonders bevorzugt 15 bis 40 Gew.-% polaren copolymerisierbaren Monomeren aus der Gruppe Acrylnitril, Methacrylnitril, Ester der (Meth)Acrylsäure mit 1 bis 4 C-Atomen im Alkylrest, Maleinsäureanhydrid, (Meth)acrylamid, Vinylalkylether mit 1 bis 8 C-Atomen im Alkylrest und oder Phenylmaleinimid oder deren Mischungen.

Als vinylaromatische Monomere haben sich Styrol und substituierte Styrole der allgemeinen Formel I

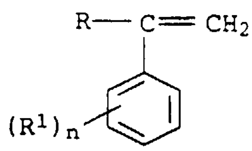

wobei R einen Alkylrest mit 1 bis 8 C-Atomen, ein Wasserstoffatom oder Halogen und $R^1$ Alkylreste mit 1 bis 8 C-Atomen oder ein Halogenatom darstellen und n den Wert 0, 1, 2 oder 3 hat, bewährt.

Verfahren zur Herstellung von Polymeren B sind dem Fachmann bekannt; entsprechende Produkte sind kommerziell erhältlich.

Als Komponente C) können die erfindungsgemäßen Formmassen 0 bis 50, vorzugsweise 5 bis 45 und insbesondere 10 bis 40 Gew.-% faser- oder teilchenförmige Füllstoffe oder deren Mischungen enthalten.

Als Beispiele für Füllstoffe seien Kohlenstoff- oder Glasfasern in Form von Glasgeweben, Glasmatten oder Glasseidenrovings, Glaskugeln sowie Wollastonit genannt, besonders bevorzugt Glasfasern.

Bei der Verwendung von Glasfasern können diese zur besseren Verträglichkeit mit den Blendkomponenten mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Die mittlere Länge der Glasfasern liegt im Bereich von 0,05 bis 0,5 mm, vorzugsweise von 0,08 bis 0,45 mm (im Spritzgußteil).

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (vorzugsweise kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Als Komponente D können in den erfindungsgemäßen thermoplastischen Formmassen bis zu 30, vorzugsweise 0,5 bis 10 Gew.-% übliche Zusatzstoffe und Verarbeitungshilfsmittel enthalten sein.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie sterisch gehinderte Phenole, Hydrochinone, verschiedene substituierte Vertreter dieser Gruppe um Kombinationen derselben in Konzentrationen bis 1 Gew.-%, bezogen auf das Gewicht der Mischung.

Als Stabilisatoren kann man ebenfalls diejenigen, die allgemein zu Polymeren zugesetzt werden, in Mengen bis zu 2,0 Gew.-% auf die Mischung verwenden.

Beispiele für Stabilisatoren sind verschiedene substituierte Resorcine, Salicylate, Benzotriazole, Benzophenone, HALS-Stabilisatoren und dergleichen, wie sie unter den Handelsnamen Topanol® und Irganox® und Tinuvin® kommerziell erhältlich sind.

Geeignete Gleit- und Entformungsmittel, die z.B. in Mengen bis zu 7 Gew.-% der thermoplastischen Masse zugesetzt werden, sind Stearinsäuren, Stearylalkohol, Stearinsäureester und -amide.

Eine weiterer möglicher Zusatzstoff sind Siliconöle, vorzugsweise in Mengen von 0,05 bis 1 Gew.-%.

Ferner können zugesetzt werden organische Farbstoffe, wie Nigrosin, Pigmente, z.B. Titandioxid, Cadmiumsulfid, Cadmiumsulfidselenid, Phthalocyanine, Ultramarinblau oder Ruß.

Die Abmischung der Komponenten A), B) und gegebenenfalls C) und/ oder D) erfolgt in der Regel nach an sich bekannten und in der Literatur beschriebenen Verfahren in der Schmelze, vorzugsweise auf Extrudern.

Die erfindungsgemäßen Formmassen weisen gute Zähigkeiten in Kombination mit guter Einfärbbarkeit auf. Die Einfärbung bzw. Pigmentierung kann dabei nach an sich bekannten Verfahren erfolgen.

Aufgrund ihres Eigenschaftsspektrums eignen sich die erfindungsgemäßen thermoplastischen Formmassen besonders zur Herstellung von farbigen Formteilen aller Art wie Fasern, Folien und Formkörpern.

Beispiele

Beispiel 1

1. Herstellung von Kautschuk 1

1.1 Herstellung der Pfropfgrundlage $a_1$)

Ein Monomerengemisch aus 3,2 g Acrylsäureester des Tricyclodecenylalkohols und 156,8 g Acrylsäure-n-butylester wurde in 1500 g Wasser unter Zusatz von 10 g des Kaliumsalzes einer $C_{12}$- bis $C_{18}$-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden eine Mischung aus weiteren 16,8 g Acrylsäureester des Tricyclodecenylalkohols, 400 g Phenoxyethylacrylat und 423,2 g Acrylsäure-n-butylester zudosiert. Nach Beendigung der Monomerzugabe wurde die Emulsion noch eine Stunde bei 65°C gehalten.

1.2 Herstellung des erfindungsgemäßen Pfropfcopolymerisats

2100 g der nach obiger Vorschrift (1.1.) hergestellten Emulsion wurden mit 1150 g Wasser und 2,7 g Kaliumperoxodisulfat gemischt und unter Rühren auf 65°C erwärmt. Nach Erreichen der Reaktionstemperatur wurde im Lauf von 3 Stunden ein Monomerengemisch aus 495 g Styrol und 165 g Acrylnitril zudosiert. Nach Beendigung der Zugabe wurde die Emulsion noch 2 Stunden bei 65°C gehalten. Das Pfropfcopolymerisat besaß eine mittlere Teilchengröße von 95 nm. Das Pfropfpolymerisat wurde mittels Calciumchloridlösung bei 95°C aus der Emulsions gefällt, mit Wasser gewaschen und im warmen Luftstrom getrocknet.

Beispiel 2

Die Herstellung des Pfropfpolymerisats erfolgte wie unter Beispiel 1. beschrieben, bei der Herstellung der Pfropfgrundlage wurden jedoch 600 g Phenoxyethylacrylat und 223,2 g Acrylsäure-n-butylester eingesetzt.

Beispiel 3

3.1. Herstellung von Pfropfgrundlage

Eine Mischung aus 156,8 g Styrol und 3,2 g Acrylsäureester des Tricyclodecenylalkohols wurden in 1500 g Wasser unter Zusatz von 10 g des Natriumsalzes einer $C_{12}$-bis $C_{18}$-Paraffinsulfonsäure, 3 g Kaliumperoxodisulfat, 3 g Natriumhydrogencarbonat unter Rühren auf 75°C erwärmt. 10 Minuten nach dem Anspringen der Polymerisationsreaktion wurden innerhalb von 3 Stunden eine Mischung von weiteren 823,2 g Styrol und 16,8 g Acrylsäureester des Tricyclodecenylalkohols zugegeben. Nach Beendigung der Monomerzugabe wurde die Dispersion noch eine Stunde bei 75°C gehalten.

3.2.Herstellung der 1. Pfropfhülle

Eine Mischung aus 1500 g Wasser, 50,8 g der nach 3.1. hergestellten Dispersion, 6 g des Natriumsalzes einer $C_{12}$-bis $C_{18}$-Paraffinsulfonsäure, 3 g Kaliumperoxodisulfat, 3 g Natriumhydrogencarbonat unter Rühren auf 65°C erwärmt. Innerhalb von 3 Stunden wurde eine Mischung von 300 g Phenoxyethylacrylat, 680 g Acrylsäure-n-butylester und 20 g Acrylsäureester des Tricyclodecenylalkohols zugegeben. Nach Beendigung der Monomerzugabe wurde die Dispersion noch 2 Stunden bei 65°C gehalten.

3.3.Herstellung der 2. Pfropfhülle

2100 g der nach 3.2. hergestellten Dispersion wurde mit 2380 g Wasser, 2,7 g Kaliumperoxodisulfat gemischt

und unter Rühren auf 65°C erwärmt. Nach Erreichen der Reaktionstemperatur wurden im Lauf von 1 Stunde 140 g Styrol sowie eine Lösung von 1 g des Natriumsalzes einer $C_{12}$-bis $C_{18}$-Paraffinsulfonsäure in Wasser zudosiert. Unmittelbar in Anschluß daran erfolgte die Herstellung der letzten Pfropfhülle.

3.4.Herstellung der 3. Pfropfhülle

Zu der nach 3.3. hergestellten Dispersion wurden im Lauf von 2 Stunden eine Mischung aus 380 g Styrol und 127 g Acrylnitril sowie eine Lösung von 2 g des Natriumsalzes einer $C_{12}$-bis $C_{18}$-Paraffinsulfonsäure in Wasser zudosiert. Nach Beendigung der Zugabe wurde die Dispersion noch 2 Stunden bei 65°C gehalten. Der $^{d}50$ - Wert der Dispersion betrug 369 nm. Das Pfropfpolymerisat wurde mittels Calciumchloridlösung bei 95°C aus der Dispersion gefällt, mit Wasser gewaschen und im warmen Luftstrom getrocknet.

Beispiel 4

Die Herstellung des Pfropfcopolymerisats erfolgte wie bei Beispiel 1 beschrieben; bei der Herstellung der Pfropfgrundlage wurde jedoch Benzylacrylat an Stelle von Phenoxyethylacrylat eingesetzt.

Beispiel 5

Die Herstellung des Pfropfcopolymerisats erfolgte wie bei Beispiel 1 beschrieben; bei der Herstellung der Pfropfgrundlage wurde jedoch Phenylpropylmethacrylat an Stelle von Phenoxyethylacrylat eingesetzt.

Beispiel 6

Die Herstellung des Pfropfcopolymerisats erfolgte wie bei Beispiel 1 beschrieben; bei der Herstellung der weichen Pfropfgrundlage wurde jedoch Phenylethylacrylat an Stelle von Phenoxyethylacrylat eingesetzt.

Vergleichsbeispiele

Beispiel 7 V

7.1. Herstellung der Pfropfgrundlage

Das Monomerengemisch aus 3,2 g Acrylsäureester des Tricyclodecenylalkohols und 156,8 g Acrylsäure-n-butylester wurde in 1500 g Wasser unter Zusatz von 10 g des Kaliumsalzes einer $C_{12}$-bis $C_{18}$-Paraffinsulfonsäure, 3 g Kaliumperoxidsulfat, 3 g Natriumhydrogencarbonat und 1,5 g Natriumpyrophosphat unter Rühren auf 65°C erwärmt. 10 Minuten nach dem Anspringen der Polymerisationsreaktion wurde innerhalb 3 Stunden eine Mischung aus weiteren 16,8 g Acrylsäureester des Tricyclodecenylalkohols und 823,2 g Acrylsäure-n-butylester zudosiert. Nach Beendigung der Monomerzugabe wurde die Emulsion noch eine Stunde bei 65°C gehalten.

7.2. Herstellung der teilchenförmigen Pfropfcopolymerisate

2100 g der nach obiger Vorschrift (7.1.) hergestellten Emulsion wurden mit 1150 g Wasser und 2,7 g Kaliumperoxodisulfat gemischt und unter Rühren auf 65°C erwärmt. Nach Erreichen der Reaktionstemperatur wurde im Lauf von 3 Stunden ein Monomerengemisch aus 495 g und 165 g Arylnitril zudosiert. Nach Beendigung der Zugabe wurde die Emulsion noch 2 Stunden bei 65°C gehalten. Das Pfropfcopolymerisat wurde mittels Calciumchloridlösung bei 95°C aus der Emulsions gefällt, mit Wasser gewaschen und im warmen Luftstrom getrocknet.

Beispiel 8 V

8.1 Herstellung der Pfropfgrundlage

12,5 g der nach Vorschrift 7.1 hergestellten Emulsion wurden mit 1500 g Wasser unter Zusatz von 3 g Kaliumperoxodisulfat, 3 g Natriumhydrogencarbonat und 1,5 g Natriumpyrophosphat unter Rühren auf 65°C erwärmt. Innerhalb von 3 Stunden wurde eine Mischung aus 20 g Acrylsäureester des Tricyclodecenylalkohols und 980 g Acrylsäure-n-butylester sowie 3 g des Kaliumsalzes einer $C_{12}$- bis $C_{18}$-Paraffinsulfonsäure zudosiert. Nach Beendigung der Monomerzugabe wurde die Emulsion noch eine Stunde bei 65°C gehalten.

8.2.Herstellung der teilchenförmigen Pfropfpolymerisate

2100 g der nach obiger Vorschrift (8.1.) hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 1 Stunde ein Monomerengemisch aus 165 g Styrol sowie 0,1 g des Kaliumsalzes einer $C_{12}$- bis $C_{18}$-Paraffinsulfonsäure zudosiert. Nach Beendigung der Zugabe wurde eine Mischung aus 372 g Styrol und 124 g Acrylnitril zudosiert. Nach Beendigung der Zugabe wurde die Emulsion noch 2 Stunden bei 65°C gehalten. Die mittlere Teilchengröße der Pfropfpolymerisate betrug 598 nm. Das Pfropfpolymerisat wurde mittels Calciumchloridlösung bei 95°C aus der Emulsions gefällt, mit Wasser gewaschen und im warmen Luftstrom getrocknet.

Beispiel 9 V

9.1. Herstellung der Pfropfgrundlage

Eine Mischung aus 156,8 g Styrol und 3,2 g Acrylsäureester des Tricyclodecenylalkohols wurden in 1500 g Wasser unter Zusatz von 10 g des Natriumsalzes einer $C_{12}$-bis $C_{18}$-Paraffinsulfonsäure, 3 g Kaliumperoxodisulfat, 3 g Natriumhydrogencarbonat unter Rühren auf 75°C erwärmt. 10 Minuten nach dem Anspringen der Polymerisationsreaktion wurde innerhalb von 3 Stunden eine Mischung von weiteren 823,2 g Styrol und 16,8 g Acrylsäureester des Tricyclodecenylalkohols zugegeben. Nach Beendigung der Monomerzugabe wurde die Dispersion noch eine Stunde bei 75°C gehalten.

9.2. Herstellung der 1. Pfropfhülle

Eine Mischung aus 1500 g Wasser, 50,8 g der nach 9.1. hergestellten Dispersion, 6 g des Natriumsalzes einer $C_{12}$-bis $C_{18}$-Paraffinsulfonsäure, 3 g Kaliumperoxodisulfat, 3 g Natriumhydrogencarbonat unter Rühren auf 65°C erwärmt. Innerhalb von 3 Stunden wurde eine Mischung von 980 g Acrylsäure-n-butylester und 20 g Acrylsäureester des Tricyclodecenylalkohols zugegeben. Nach Beendigung der Monomerzugabe wurde die Dispersion noch 2 Stunden bei 65°C gehalten.

9.3. Herstellung der 2. Pfropfhülle

2100 g der nach 9.2 hergestellten Dispersion wurden mit 2380 g Wasser und 2,7 g Kaliumperoxidsulfat gemischt und unter Rühren auf 65°C erwärmt. Nach Erreichen der Reaktionstemperatur wurden im Lauf von 1 Stunde 140 g Styrol sowie eine Lösung von 1 g des Natriumsalzes einer $C_{12}$-bis $C_{18}$-Paraffinsulfonsäure in Wasser zudosiert. Unmittelbar in Anschluß daran erfolgte die Herstellung der letzten Pfropfhülle.

9.4. Herstellung der 3 Pfropfhülle

Zu der nach 9.3 hergestellten Dispersion wurde im Lauf von 2 Stunden eine Mischung aus 380 g Styrol und 127 g Acrylnitril sowie eine Lösung von 2 g des Natriumsalzes einer $C_{12}$-bis $C_{18}$-Paraffinsulfonsäure in Wasser zudosiert. Nach Beendigung der Zugabe wurde die Dispersion noch 2 Stunden bei 65°C gehalten. Der $^{d}50$ - Wert der Dispersion betrug 369 nm. Das Pfropfcopolymerisat wurde mittels Calciumchloridlösung bei 95°C aus der Dispersion gefällt, mit Wasser gewaschen und im warmen Luftstrom getrocknet.

Beispiel 10

Abmischung der Pfropfcopolymerisate der Beispiele 1-9 mit einem Thermoplasten B

Zur Herstellung der Abmischungen wurde als Komponente B ein Styrol/Acrylnitril -Copolymerisat mit einem Acrylnitril- Gehalt von 34 % und einer Viskositätszahl von 78 ml/g (die Viskositätszahlen wurden an einer 0,5 %igen Lösung in DMF bei 23°C bestimmt) verwendet. Die gefällten und getrockneten Pfropfcomischpolymerisate wurden auf einem Extruder mit der Komponente B bis 260°C abgemischt, so daß der Pfropfcopolymergehalt 50 Gew.-% betrug.
Aus diesem Gemisch wurden Formteile hergestellt, an denen ΔE bestimmt wurde.
ΔE - Werte der Abmischungen mit den Kautschuken 1 bis 6 und der Vergleichsversuche:

| | ΔE |
|---|---|
| Abmischung mit Pfropfcopolymerisat aus Bsp. 1 | 11 |

(fortgesetzt)

| | $\Delta E$ |
|---|---|
| Abmischung mit Pfropfcopolymerisat aus Bsp. 2 | 13 |
| Abmischung mit Pfropfcopolymerisat aus Bsp. 3 | 13 |
| Abmischung mit Pfropfcopolymerisat aus Bsp. 4 | 10 |
| Abmischung mit Pfropfcopolymerisat aus Bsp. 5 | 10 |
| Abmischung mit Pfropfcopolymerisat aus Bsp. 6 | 9 |
| Abmischung mit Vergleichspfropfcopolymer aus Bsp. 7V | 7 |
| Abmischung mit Vergleichspfropfcopolymer aus Bsp. 8V | 2 |
| Abmischung mit Vergleichspfropfcopolymer aus Bsp. 9V | 9 |

Die $\Delta E$ - Werte wurden nach DIN 6174 aus einer Farbdifferenzmessung der Prüfkörper über weißem und schwarzem Untergrund errechnet.

## Patentansprüche

**1.** Teilchenförmige Pfropfcopolymerisate A), aufgebaut aus

$a_1$) 15 bis 70 Gew.-%, bezogen auf A), einer Pfropfgrundlage mit einer Glasübergangstemperatur von weniger als 10°C auf der Basis von

$a_{11}$) 2,5 bis 97,4 Gew.-%, bezogen auf $a_1$), mindestens eines Alkylacrylats mit 1 bis 30 C-Atomen im Alkylrest,

$a_{12}$) 0 bis 49,9 Gew.-%, bezogen auf $a_1$), eines weiteren, mit $a_{11}$) copolymerisierbaren einfach ungesättigten Monomeren

$a_{13}$) 0,01 bis 7,5 Gew.-%, bezogen auf $a_1$), mindestens eines polyfunktionellen vernetzend wirkenden Monomeren und

$a_{14}$) 2,5 bis 97,4 Gew.-%, bezogen auf $a_1$), mindestens eines Monomeren mit einem Brechungsindex $n_D^{20}$ von mehr als 1,50 der folgenden allgemeinen Formel

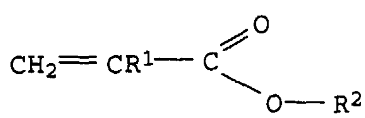

wobei
$R^1$ Wasserstoff oder eine Methylgruppe und $R^2$ $C_6$-$C_{12}$ Aryl-, mit $C_1$-$C_4$ Alkyl- oder Alkoxy substituiertes $C_6$-$C_{12}$ Aryl oder halogensubstituiertes Aryl darstellen, wobei der Substituent $R^2$ direkt am aromatischen Ring oder über eine aliphatische Gruppe an den Acrylsäureester gebunden sein kann,

und

$a_2$) 30 bis 85 Gew.-%, bezogen auf A), mindestens einer weiteren, in Gegenwart des nach der Herstellung von $a_1$) erhaltenen Produkts, polymerisierten Stufe aus vinylaromatischen Monomeren, oder eines polaren, ethylenisch ungesättigten Monomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest oder deren Mischungen.

**2.** Teilchenförmige Pfropfcopolymerisate nach Anspruch 1, worin die Reste $R^2$ der Monomeren $a_{14}$ ausgewählt sind aus der Gruppe Phenoxyethyl-, Benzyl-, Phenylpropyl- und Phenylethyl.

**3.** Thermoplastische Formmassen, enthaltend

A) ein teilchenförmiges Pfropfcopolymerisat gemäß Anspruch 1
B) ein von A verschiedenes thermoplastisches Polymerisat mit einer Glasübergangstemperatur von mehr als 20°C.

**4.** Thermoplastische Formmassen nach Anspruch 3, enthaltend als Komponente B) ein Copolymerisat aus

$b_1$) 50 bis 90 Gew.-% Styrol und/oder $\alpha$-Methylstyrol und
$b_{21}$) 10 bis 50 Gew.-% (Meth)acrylnitril und oder Methyl(meth)acrylat
$b_{22}$) 0 bis 40 Gew.-% andere Monomere.

**5.** Verwendung der Pfropfcopolymerisate gemäß den Ansprüchen 1 bis 4 zur Herstellung eingefärbter thermoplastischer Formmassen.

## Claims

**1.** A particulate graft copolymer A) composed of

$a_1$) from 15 to 70% by weight, based on A), of a grafting base having a glass transition temperature of less than 10°C and based on

$a_{11}$) from 2.5 to 97.4% by weight, based on $a_1$), of at least one alkyl acrylate where the alkyl radical is of 1 to 30 carbon atoms,

$a_{12}$) from 0 to 49.9% by weight, based on $a_1$), of a further monounsaturated monomer copolymerizable with $a_{11}$),

$a_{13}$) from 0.01 to 7.5% by weight, based on $a_1$), of at least one polyfunctional monomer having a crosslinking action and

$a_{14}$) from 2.5 to 97.4% by weight, based on $a_1$), of at least one monomer having a refractive index $n_D^{20}$ of more than 1.50 of the following general formula

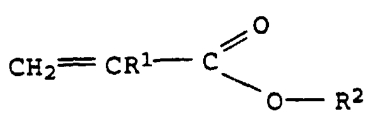

where
$R^1$ is hydrogen or methyl and $R^2$ is $C_6$-$C_{12}$ aryl which is unsubstituted or substituted by $C_1$-$C_4$ alkyl or by alkoxy, or halogen-substituted aryl, it being possible for $R^2$ to be bonded directly to the aromatic ring or via an aliphatic group to the acrylate,

and

$a_2$) from 30 to 85% by weight, based on A), of at least one further stage polymerized in the presence of the product obtained after the preparation of $a_1$) and comprising vinylaromatic monomers or of a polar, ethylenically unsaturated monomer selected from the group consisting of acrylonitrile, methacrylonitrile, esters of (meth) acrylic acid where the alkyl radical is of 1 to 20 carbon atoms, maleic anhydride, (meth)acrylamide and/or vinyl alkyl ethers where the alkyl radical is of 1 to 8 carbon atoms and mixtures thereof.

**2.** A particulate graft copolymer as claimed in claim 1, in which the radicals $R^2$ of the monomers $a_{14}$ are selected

from the group consisting of phenoxyethyl, benzyl, phenylpropyl and phenylethyl.

**3.** A thermoplastic molding material containing

A) a particulate graft copolymer as claimed in claim 1 and
B) a thermoplastic polymer which differs from A and has a glass transition temperature higher than 20°C.

**4.** A thermoplastic molding material as claimed in claim 3, containing, as component B), a copolymer of

$b_1$) from 50 to 90% by weight of styrene or α-methylstyrene and
$b_{21}$) from 10 to 50% by weight of (meth)acrylonitrile or methyl (meth)acrylate and
$b_{22}$) from 0 to 40% by weight of other monomers.

**5.** The use of a graft copolymer as claimed in any of claims 1 to 4 for producing colored thermoplastic molding materials.

**Revendications**

**1.** Copolymères de greffage particulaires A), constitués de

$a_1$) 15 à 70% en poids, par rapport à A), d'une base de greffage présentant une température de transition vitreuse inférieure à 10°C, à base de

$a_{11}$) 2,5 à 97,4% en poids, par rapport à $a_1$), d'au moins un acrylate d'alkyle comportant de 1 à 30 atomes de carbone dans le radical alkyle,
$a_{12}$) 0 à 49,9% en poids, par rapport à $a_1$), d'un autre monomère monoinsaturé copolymérisable avec $a_{11}$),
$a_{13}$) 0,01 à 7,5% en poids, par rapport à $a_1$), d'au moins un monomère polyfonctionnel agissant comme réticulant, et
$a_{14}$) 2,5 à 97,4% en poids, par rapport à $a_1$), d'au moins un monomère présentant un indice de réfraction $n^{20}_D$ supérieur à 1,50, de la formule générale suivante

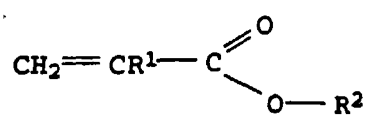

dans laquelle

$R^1$ représente l'hydrogène ou un radical méthyle, et $R^2$ représente un radical aryle en $C_6$ à $C_{12}$, aryle en $C_6$ à $C_{12}$ substitué par un alcoxy ou un alkyle en $C_1$ à $C_4$, ou aryle substitué par un halogène, le substituant $R^2$ pouvant être directement lié au noyau aromatique ou être lié à l'ester acrylique via un groupe aliphatique,

et
$a_2$) 30 à 85% en poids, par rapport à A), d'au moins une autre étape polymérisée en présence du produit obtenu après la préparation de $a_1$), à base de monomères vinylaromatiques, ou d'un monomère polaire, éthyléniquement insaturé, choisi dans le groupe formé par l'acrilonitrile, le méthacrylonitrile, des esters (méth) acryliques comportant de 1 à 20 atomes de carbone dans le radical alkyle, l'anhydride maléique, le (méth) acrylamide et/ou des éthers vinylalkyliques comportant de 1 à 8 atomes de carbone dans le radical alkyle, ou leurs mélanges.

**2.** Copolymères de greffage particulaires selon la revendication 1, caractérisé en ce que les restes $R^2$ des monomères $a_{14}$ sont choisis dans le groupe formé par les radicaux phénoxyéthyle, benzyle, phénylpropyle et phényléthyle.

**3.** Masses de moulage thermoplastiques, contenant

A) un copolymère de greffage particulaire selon la revendication 1
B) un polymère thermoplastique différent de A, présentant une température de transition vitreuse supérieure à 20°C.

**4.** Masses de moulage thermoplastiques selon la revendication 3, contenant comme composant B) un copolymère constitué de:

$b_1$) 50 à 90% en poids de styrène et/ou d'$\alpha$-méthylstyrène et
$b_{21}$) 10 à 50% en poids de nitrile(méth)acrylique et/ou de (méth)acrylate de méthyle
$b_{22}$) 0 à 40% en poids d'autres monomères.

**5.** Utilisation des copolymères de greffage selon les revendications 1 à 4 pour la production de masses de moulage thermoplastiques colorées dans la masse.